# EUROPEAN PATENT APPLICATION

(11) **EP 4 811 743 A1**
(43) Date of publication of application: **23.09.2026**
(21) Application number: 24902368.0
(22) Date of filing: 24.10.2024
(51) Int. Cl.: H04L 43/0852

(54) **LATENCY MEASUREMENT METHOD AND RELATED APPARATUS THEREFOR**

(30) Priority: 12.12.2023 CN 202311709589
(71) Applicant: Huawei Technologies Co., Ltd., Shenzhen, Guangdong 518129 (CN)
(72) Inventor: SUN, Haiyang, Shenzhen, Guangdong 518129 (CN); LI, Yan, Shenzhen, Guangdong 518129 (CN)
(74) Representative: MERH-IP Matias Erny Reichl Hoffmann Patentanwälte PartG mbB
(86) International application number: PCT/CN2024/126958
(87) International publication number: WO 2025/123944

(57) **Abstract**

This application provides a delay measurement method, including: obtaining a first delay and a second delay of a first data packet, where the first delay is a delay between a user plane apparatus and a terminal device, and the second delay is a delay between the user plane apparatus and an access network apparatus; and determining a target delay based on the first delay and the second delay, where the target delay is a delay between the terminal device and the access network apparatus. According to the solution provided in this application, when determining an air interface delay, it is not necessary to specially send a data packet carrying a timestamp between the terminal device and the access network apparatus for a plurality of times for measurement, so that overheads caused by measuring the air interface delay are reduced, thereby improving air interface capacities of the access network apparatus and the terminal device.

## Description

This application claims priority to Chinese Patent Application No. 202311709589.8, filed with the China National Intellectual Property Administration on December 12, 2023 and entitled "DELAY MEASUREMENT METHOD AND RELATED APPARATUS THEREFOR", which is incorporated herein by reference in its entirety.

### TECHNICAL FIELD

This application relates to the field of communication technologies, and in particular, to a delay measurement method and a related apparatus therefor.

### BACKGROUND

Some services that guarantee delay and reliability (for example, ultra-reliable and low latency communication (ultra-reliable and low latency communication, URLLC)) have a relatively high requirement on quality of service (quality of service, QoS). In actual application, to ensure delay and reliability, a device in a network needs to be able to sense link quality in a timely manner and perform corresponding adjustment.

Delay is a very important aspect of QoS. Real-time delay measurement can implement visualized QoS management for URLLC services. Currently, measurement of a data packet delay between a terminal device and a user plane function (user plane function, UPF) network element in a core network can be completed through QoS monitoring (QoS Monitoring), and includes measurement of an uplink/downlink data packet delay (which may also be referred to as an air interface delay) between the terminal device and an access network apparatus, and measurement of an uplink/downlink data packet delay between the access network apparatus and the UPF.

To measure an air interface delay of each data packet, it is necessary to send the data packet back and forth between the access network apparatus and the terminal device, and carry a timestamp each time. Consequently, overheads are extremely high, and air interface capacities of the access network apparatus and the terminal device are affected.

### SUMMARY

This application provides a delay measurement method, to measure an air interface delay of each data packet with relatively small overheads. This application further provides a corresponding apparatus, system, computer-readable storage medium, computer program product, and the like.

A first aspect of this application provides a delay measurement method, including: obtaining a first delay and a second delay of a first data packet, where the first delay is a delay between a user plane apparatus and a terminal device, and the second delay is a delay between the user plane apparatus and an access network apparatus; and determining a target delay based on the first delay and the second delay, where the target delay is a delay between the terminal device and the access network apparatus.

The delay measurement method in this application may be applied to delay measurement for various types of communication services, which are, for example, URLLC services, but are not limited to URLLC services, or may be other types of communication services for which an air interface delay needs to be measured.

In this application, the user plane apparatus may be an apparatus that can perform a user plane function in a core network, for example, a user plane function (user plane function, UPF) network element. The access network apparatus may be various types of base stations, and the terminal device may be an apparatus having an air interface transmission capability or a set including an apparatus having an air interface transmission capability and another apparatus.

In this application, the first delay may be a delay measured by using a user plane protocol between the terminal device and the user plane apparatus, for example, a delay that is between the terminal device and the user plane apparatus and that is measured by using a performance measurement function (performance measurement functionality, PMF) protocol. The delay may be a round-trip time (round trip time, RTT) between the terminal device and the user plane apparatus, an uplink delay, or a downlink delay. The RTT is also referred to as a round-trip delay.

In this application, the second delay may be a delay that is between the user plane apparatus and the access network apparatus and that is measured by using a QoS monitoring (QoS Monitoring) process. The delay may be an RTT, an uplink delay, or a downlink delay between the user plane apparatus and the access network apparatus.

In this application, the target delay may be an air interface delay between the terminal device and the access network apparatus, and the target delay may be a difference between the first delay and the second delay.

In this application, the process in the first aspect may be performed by the user plane apparatus, or may be performed by another apparatus in the core network. If the process is performed by the another apparatus, only the first delay and the second delay need to be obtained from the user plane apparatus.

In the first aspect, for each data packet, the first delay between the terminal device and the user plane apparatus and the second delay between the user plane apparatus and the access network apparatus may be obtained, and then the air interface delay between the terminal device and the access network apparatus may be obtained through calculation by using the first delay and the second delay. In this manner of determining the air interface delay, it is not necessary to specially send a data packet carrying a timestamp between the terminal device and the access network apparatus for a plurality of times for measurement, so that overheads caused by measuring the air interface delay are reduced, thereby improving air interface capacities of the access network apparatus and the terminal device.

In a possible implementation, the first delay is a round-trip delay between the user plane apparatus and the terminal device, the second delay is a round-trip delay between the user plane apparatus and the access network apparatus, and the target delay is a round-trip delay between the terminal device and the access network apparatus.

In this possible implementation, both the first delay and the second delay are RTTs, and therefore the determined target delay is also an air interface RTT. The air interface RTT may be obtained by using the first delay and the second delay, so that overheads caused by measuring the air interface RTT are reduced.

In a possible implementation, the first delay is an uplink delay between the terminal device and the user plane apparatus, the second delay is an uplink delay between the access network apparatus and the user plane apparatus, and the target delay is an uplink delay between the terminal device and the access network apparatus.

In this possible implementation, both the first delay and the second delay are uplink delays, and therefore the determined target delay is also an air interface uplink delay. The air interface uplink delay may be obtained by using the first delay and the second delay, so that overheads caused by measuring the air interface uplink delay are reduced.

In a possible implementation, the first delay is a downlink delay between the user plane apparatus and the terminal device, the second delay is a downlink delay between the user plane apparatus and the access network apparatus, and the target delay is a downlink delay between the terminal device and the access network apparatus.

In this possible implementation, both the first delay and the second delay are downlink delays, and therefore the determined target delay is also an air interface downlink delay. The air interface downlink delay may be obtained by using the first delay and the second delay, so that overheads caused by measuring the air interface downlink delay are reduced.

In a possible implementation, obtaining the first delay and the second delay of the first data packet includes: sending, by the user plane apparatus, the first data packet, where the first data packet includes a first indication and a second indication, the first indication indicates the access network apparatus to perform quality of service QoS monitoring, the second indication indicates the terminal device to report first information, and the first information is related to the first delay; and receiving, by the user plane apparatus, the first information and second information, where the second information is QoS monitoring information of the access network apparatus, the first information is used to determine the first delay, and the second information is used to determine the second delay.

In this possible implementation, the user plane apparatus may carry a first indication and a second indication in each data packet sent by the user plane apparatus. The first indication may be a QoS monitoring indication (QoS monitoring indication), and the second indication may be an RTT indication, an uplink delay indication, or a downlink delay indication. In this application, by using the first indication and the second indication, the user plane apparatus can complete two measurements by using one data packet, and can measure both the first delay and the second delay, thereby improving accuracy of air interface delay measurement of a single data packet.

In a possible implementation, there is an association relationship between the first information and the second information of the first data packet.

In this possible implementation, there is an association relationship between the first information and the second information of the first data packet. Therefore, the user plane apparatus or another network element configured to calculate the target delay can accurately calculate the first delay and the second delay of a same data packet based on the association relationship, to determine the corresponding air interface delay.

In a possible implementation, the first information and the second information are associated by using a first identifier.

In this possible implementation, the first identifier may be a number or an index used to mark a data packet sent by the user plane apparatus, or may be another identifier, for example, a sequence number (sequence number, SN). The first information and the second information are associated by using the identifier, so that a calculation speed of the air interface delay can be improved.

In a possible implementation, the first information and the second information are included in a same packet.

In this possible implementation, the first information and the second information are included in a same packet. Therefore, after receiving the packet, the user plane apparatus may directly calculate the first delay and the second delay, to obtain the air interface delay without searching for an association relationship, thereby further improving a calculation speed of the air interface delay.

In a possible implementation, when the terminal device is associated with a device-side time sensitive network translator (device-side time sensitive network translator, DS-TT), the DS-TT is connected to the terminal device, the first delay is a delay between the DS-TT and the user plane apparatus, and the target delay is a delay between the terminal device and the access network apparatus.

In this possible implementation, the DS-TT and the terminal device are usually connected in a wired manner, which also generates a delay. In this case, the target delay may be a difference between the first delay and the second delay minus a delay between the DS-TT and the terminal device. For this scenario including the DS-TT and the terminal device, accuracy of the air interface delay can be improved by further subtracting the delay between the DS-TT and the terminal device from the difference between the first delay and the second delay.

In a possible implementation, the method further includes: obtaining a third delay between the user plane apparatus and an application server; and determining a delay between the terminal device and the application server based on the first delay and the third delay.

In this possible implementation, the delay between the terminal device and the application server may be a sum of the first delay and the third delay. An end-to-end delay between the terminal device and the application server in a data network (data network, DN) can be quickly determined through the calculation.

In a possible implementation, the method further includes: receiving, by the user plane apparatus, a per-packet QoS monitoring indication from the control plane apparatus, where the per-packet QoS monitoring indication indicates the user plane apparatus to perform QoS monitoring on each data packet sent by the user plane apparatus.

In this possible implementation, the per-packet QoS monitoring indication may be sent by an application function network element (application function, AF), and may be sent sequentially through a policy control network element (Policy Control Function, PCF) and a session management network element (Session Management Function, SMF) to the UPF. The AF sends a segmented per-packet QoS monitoring indication, that is, indicates to measure, for each data packet, a delay between the user plane apparatus and the access network apparatus, and a delay between the access network apparatus and the terminal device. The AF controls per-packet delay measurement to better meet an application requirement.

A second aspect of this application provides a delay measurement method, including: receiving, by an access network apparatus, a first data packet, where the first data packet includes a first indication and a second indication, the first indication indicates the access network apparatus to perform quality of service QoS monitoring, and the second indication indicates a terminal device to report first information; performing, by the access network apparatus, QoS monitoring between the access network apparatus and a user plane apparatus based on the first indication; and sending, by the access network apparatus, the first data packet to the terminal device, and receiving the first information from the terminal device; sending, by the access network apparatus, the first information and second information to the user plane apparatus, where the second information is QoS monitoring information of the access network apparatus, the first information is used to determine a first delay, the second information is used to determine a second delay, the first delay is a delay between the user plane apparatus and the terminal device, the second delay is a delay between the user plane apparatus and the access network apparatus, the first delay and the second delay are used to determine a target delay, and the target delay is a delay between the terminal device and the access network apparatus.

In this application, the access network apparatus may perform QoS monitoring between the access network apparatus and the user plane apparatus based on the first indication, send the first data packet to the terminal device based on the second indication, to complete delay measurement between the terminal device and the user plane apparatus, and then return the first information and the second information to the user plane apparatus. The access network apparatus does not need to measure an air interface delay between the access network apparatus and the terminal device. The user plane apparatus may determine the air interface delay between the terminal device and the access network apparatus based on the first information and the second information, so that overheads caused by measuring the air interface delay are reduced, thereby improving an air interface capacity of the access network apparatus.

In a possible implementation, a packet in which the first information is located includes a third indication, and the third indication indicates the access network apparatus to add the second information to the packet in which the first information is located. The access network apparatus adds, based on the third indication, the second information to the packet in which the first information is located.

In this possible implementation, when returning the first information to the access network apparatus, the terminal device may add the third indication to the packet in which the first information is located, to indicate the access network apparatus to add the second information to the packet, so that the access network apparatus reports the first information and the second information to the user plane apparatus by using one packet.

A third aspect of this application provides a delay measurement method, including: receiving, by a terminal device, a first data packet, where the first data packet includes a second indication, and the second indication indicates the terminal device to report first information; determining, by the terminal device, the first information based on the second indication; and sending, by the terminal device, the first information to an access network apparatus, where the first information is used to determine a first delay, and the first delay is a delay between the user plane apparatus and the terminal device.

In this application, the terminal device only needs to return the first information to the access network apparatus based on the second indication, and does not need to send a data packet carrying a timestamp to the access network apparatus for a plurality of times to measure an air interface delay, so that overheads caused by measuring the air interface delay are reduced, thereby improving an air interface capacity of the terminal device.

In a possible implementation, the method further includes: adding, by the terminal device, a third indication to a packet in which the first information is located, where the third indication indicates the access network apparatus to add the second information to the packet in which the first information is located. The foregoing step of sending, by the terminal device, the first information to the access network apparatus includes: sending, by the terminal device, the packet including the first information and the third indication to the access network apparatus.

In this possible implementation, when returning the first information to the access network apparatus, the terminal device may add the third indication to the packet in which the first information is located, to indicate the access network apparatus to add the second information to the packet, so that the access network apparatus reports the first information and the second information to the user plane apparatus by using one packet.

In a possible implementation, the second indication in the first data packet is a round-trip time RTT message. Correspondingly, the first information is round-trip time RTT response information.

In a possible implementation, the second indication in the first data packet indicates to send an uplink synchronization packet. Correspondingly, the packet including the first information is an uplink synchronization packet.

In a possible implementation, the second indication in the first data packet indicates to send a downlink synchronization packet, the downlink synchronization packet further includes a downlink delay indication, and the downlink delay indication indicates the terminal device to report a downlink delay between the user plane apparatus and the terminal device. Correspondingly, the first information is a downlink synchronization delay, and the first delay is a downlink delay between the user plane apparatus and the terminal device.

In the foregoing several implementations, the second indication indicates different content in different forms, so that the terminal device returns corresponding RTT response information, uplink synchronization packet, or downlink synchronization packet, thereby completing measurement of the RTT, the uplink delay, or the downlink delay.

A fourth aspect of this application provides a communication apparatus. The communication apparatus includes a transceiver module and a processing module.

The processing module is configured to obtain a first delay and a second delay of a first data packet, where the first delay is a delay between a user plane apparatus and a terminal device, and the second delay is a delay between the user plane apparatus and an access network apparatus.

The processing module is further configured to determine a target delay based on the first delay and the second delay, where the target delay is a delay between the terminal device and the access network apparatus.

In a possible implementation, the first delay is a round-trip delay between the user plane apparatus and the terminal device, the second delay is a round-trip delay between the user plane apparatus and the access network apparatus, and the target delay is a round-trip delay between the terminal device and the access network apparatus.

In a possible implementation, the first delay is an uplink delay between the terminal device and the user plane apparatus, the second delay is an uplink delay between the access network apparatus and the user plane apparatus, and the target delay is an uplink delay between the terminal device and the access network apparatus.

In a possible implementation, the first delay is a downlink delay between the user plane apparatus and the terminal device, the second delay is a downlink delay between the user plane apparatus and the access network apparatus, and the target delay is a downlink delay between the terminal device and the access network apparatus.

In a possible implementation, the transceiver module is configured to send a first data packet, where the first data packet includes a first indication and a second indication, the first indication indicates the access network apparatus to perform quality of service QoS monitoring, the second indication indicates the terminal device to report first information, and the first information is related to the first delay.

The transceiver module is further configured to receive the first information and second information, where the second information is QoS monitoring information of the access network apparatus, the first information is used to determine the first delay, and the second information is used to determine the second delay.

In a possible implementation, there is an association relationship between the first information and the second information of the first data packet.

In a possible implementation, the first information and the second information are associated by using a first identifier.

In a possible implementation, the first information and the second information are included in a same packet.

In a possible implementation, when the terminal device is associated with a DS-TT, the DS-TT is connected to the terminal device, the first delay is a delay between the DS-TT and the user plane apparatus, and the target delay is a delay between the terminal device and the access network apparatus.

In a possible implementation, the transceiver module is further configured to obtain a third delay between the user plane apparatus and an application server.

The processing module is further configured to determine a delay between the terminal device and the application server based on the first delay and the third delay.

In a possible implementation, the transceiver module is further configured to receive a per-packet QoS monitoring indication from the control plane apparatus, where the per-packet QoS monitoring indication indicates the user plane apparatus to perform QoS monitoring on each data packet sent by the user plane apparatus.

A fifth aspect of this application provides a communication apparatus. The communication apparatus includes a transceiver module and a processing module.

The transceiver module is configured to receive a first data packet, where the first data packet includes a first indication and a second indication, the first indication indicates an access network apparatus to perform quality of service QoS monitoring, and the second indication indicates a terminal device to report first information.

The processing module is configured to perform QoS monitoring between the access network apparatus and a user plane apparatus based on the first indication.

The transceiver module is further configured to: send the first data packet to the terminal device, and receive the first information from the terminal device.

The transceiver module is further configured to send the first information and second information to the user plane apparatus, where the second information is QoS monitoring information of the access network apparatus, the first information is used to determine a first delay, the second information is used to determine a second delay, the first delay is a delay between the user plane apparatus and the terminal device, the second delay is a delay between the user plane apparatus and the access network apparatus, the first delay and the second delay are used to determine a target delay, and the target delay is a delay between the terminal device and the access network apparatus.

In a possible implementation, the processing module is further configured to: when a packet in which the first information is located includes a third indication, and the third indication indicates the access network apparatus to add the second information to the packet in which the first information is located, add the second information to the packet in which the first information is located.

A sixth aspect of this application provides a communication apparatus. The communication apparatus includes a transceiver module and a processing module.

The transceiver module is configured to receive a first data packet, where the first data packet includes a second indication, and the second indication indicates the terminal device to report first information.

The processing module is configured to determine the first information based on the second indication.

The transceiver module is further configured to send the first information to the access network apparatus, where the first information is used to determine a first delay, and the first delay is a delay between the user plane apparatus and the terminal device.

In a possible implementation, the processing module is further configured to add a third indication to a packet in which the first information is located, where the third indication indicates the access network apparatus to add second information to the packet in which the first information is located.

The transceiver module is further configured to send the packet including the first information and the third indication to the access network apparatus.

In a possible implementation, the second indication in the first data packet is a round-trip time RTT message. Correspondingly, the first information is round-trip time RTT response information.

In a possible implementation, the second indication in the first data packet indicates to send an uplink synchronization packet. Correspondingly, the packet including the first information is an uplink synchronization packet.

In a possible implementation, the second indication in the first data packet indicates to send a downlink synchronization packet, the downlink synchronization packet further includes a downlink delay indication, and the downlink delay indication indicates the terminal device to report a downlink delay between the user plane apparatus and the terminal device. Correspondingly, the first information is a downlink synchronization delay, and the first delay is a downlink delay between the user plane apparatus and the terminal device.

A seventh aspect of this application provides a communication apparatus. The communication apparatus includes a processor, a memory, and a transceiver. The memory stores a computer program or computer instructions. The processor is configured to invoke and run the computer program or the computer instructions stored in the memory, so that the processor implements the processing operation in the first aspect and any implementation of the first aspect. The transceiver is configured to receive and send a signal, for example, implement the receiving operation in the first aspect and any implementation of the first aspect.

An eighth aspect of this application provides a communication apparatus. The communication apparatus includes a processor, a memory, and a transceiver. The memory stores a computer program or computer instructions. The processor is configured to invoke and run the computer program or the computer instructions stored in the memory, so that the processor implements the processing operation in the second aspect and any implementation of the second aspect. The transceiver is configured to receive and send a signal, for example, implement the receiving operation in the second aspect and any implementation of the second aspect.

A ninth aspect of this application provides a communication apparatus. The communication apparatus includes a processor, a memory, and a transceiver. The memory stores a computer program or computer instructions. The processor is configured to invoke and run the computer program or the computer instructions stored in the memory, so that the processor implements the processing operation in the third aspect and any implementation of the third aspect. The transceiver is configured to receive and send a signal, for example, implement the receiving operation in the third aspect and any implementation of the third aspect.

A tenth aspect of this application provides a communication apparatus. The communication apparatus includes a processor, and the processor is configured to perform the method according to the first aspect and any implementation of the first aspect.

An eleventh aspect of this application provides a communication apparatus. The communication apparatus includes a processor, and the processor is configured to perform the second aspect and any implementation of the second aspect.

A twelfth aspect of this application provides a communication apparatus. The communication apparatus includes a processor, and the processor is configured to perform the third aspect and any implementation of the third aspect.

A thirteenth aspect of this application provides a computer-readable storage medium, including computer instructions. When the instructions are run on a computer, the computer is enabled to perform the method according to the first aspect and any implementation of the first aspect.

A fourteenth aspect of this application provides a computer-readable storage medium, including computer instructions. When the instructions are run on a computer, the computer is enabled to perform the second aspect and any implementation of the second aspect.

A fifteenth aspect of this application provides a computer-readable storage medium, including computer instructions. When the instructions are run on a computer, the computer is enabled to perform the third aspect and any implementation of the third aspect.

A sixteenth aspect of this application provides a computer program product including instructions. When the computer program product runs on a computer, the computer is enabled to perform the method according to the first aspect and any implementation of the first aspect.

A seventeenth aspect of this application provides a computer program product including instructions. When the computer program product runs on a computer, the computer is enabled to perform the second aspect and any implementation of the second aspect.

An eighteenth aspect of this application provides a computer program product including instructions. When the computer program product runs on a computer, the computer is enabled to perform the third aspect and any implementation of the third aspect.

A nineteenth aspect of this application provides a chip apparatus including a processor. The processor is configured to invoke a computer program or computer instructions in a memory, so that the processor performs the first aspect and any implementation of the first aspect.

Optionally, the processor is coupled to the memory through an interface.

A twentieth aspect of this application provides a chip apparatus including a processor. The processor is configured to invoke a computer program or computer instructions in a memory, so that the processor performs the second aspect and any implementation of the second aspect.

Optionally, the processor is coupled to the memory through an interface.

A twenty-first aspect of this application provides a chip apparatus including a processor. The processor is configured to invoke a computer program or computer instructions in a memory, so that the processor performs the third aspect and any implementation of the third aspect.

Optionally, the processor is coupled to the memory through an interface.

A twenty-second aspect of this application provides a communication system. The communication system includes a terminal device, an access network apparatus, and a user plane apparatus. The user plane apparatus is configured to perform the method according to the first aspect and any implementation of the first aspect. The access network apparatus is configured to perform the second aspect and any implementation of the second aspect. The terminal device is configured to perform the third aspect and any implementation of the third aspect.

For technical effects of the fourth aspect, the seventh aspect, the tenth aspect, the thirteenth aspect, the sixteenth aspect, the nineteenth aspect, and the twenty-second aspect of this application, refer to technical effects of the first aspect and any possible implementation of the first aspect for understanding.

For technical effects of the fifth aspect, the eighth aspect, the eleventh aspect, the fourteenth aspect, the seventeenth aspect, and the twentieth aspect of this application, refer to technical effects of the second aspect and any possible implementation of the second aspect for understanding.

For technical effects of the sixth aspect, the ninth aspect, the twelfth aspect, the fifteenth aspect, the eighteenth aspect, and the twenty-first aspect of this application, refer to technical effects of the third aspect and any possible implementation of the third aspect for understanding.

### BRIEF DESCRIPTION OF DRAWINGS

FIG. 1 is a diagram of an architecture of a communication system according to an embodiment of this application;
FIG. 2 is a diagram of an example of quality of service monitoring according to an embodiment of this application;
FIG. 3 is a diagram of an embodiment of a delay measurement method according to an embodiment of this application;
FIG. 4 is a diagram of a communication architecture of delay measurement according to an embodiment of this application;
FIG. 5A is a diagram of another embodiment of a delay measurement method according to an embodiment of this application;
FIG. 5B is a diagram of an example structure of a data packet according to an embodiment of this application;
FIG. 5C is a diagram of an example of a round-trip delay according to an embodiment of this application;
FIG. 6A is a diagram of another embodiment of a delay measurement method according to an embodiment of this application;
FIG. 6B is a diagram of another example of a round-trip delay according to an embodiment of this application;
FIG. 7A is a diagram of another embodiment of a delay measurement method according to an embodiment of this application;
FIG. 7B is a diagram of an example of an uplink delay according to an embodiment of this application;
FIG. 8A is a diagram of another embodiment of a delay measurement method according to an embodiment of this application;
FIG. 8B is a diagram of an example of a downlink delay according to an embodiment of this application;
FIG. 9 is a diagram of a structure of a communication apparatus according to an embodiment of this application;
FIG. 10 is a diagram of another structure of a communication apparatus according to an embodiment of this application;
FIG. 11 is a diagram of another structure of a communication apparatus according to an embodiment of this application; and
FIG. 12 is a diagram of another structure of a communication apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may know that with development of technologies and emergence of new scenarios, the technical solutions provided in embodiments of this application are also applicable to resolving similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

This application provides a delay measurement method, to measure an air interface delay of each data packet with relatively small overheads. This application further provides a corresponding apparatus, system, computer-readable storage medium, computer program product, and the like. Details are separately described in the following.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new generation (new generation, NR) communication system, or a future 6th generation communication system.

In the various communication systems, a communication system operated by an operator may be referred to as an operator network. The operator network may also be referred to as a public land mobile network (public land mobile network, PLMN), is a network established and operated by a government or an operator approved by the government to provide a land mobile communication service for the public, and is mainly a public network through which a mobile network operator (mobile network operator, MNO) provides a mobile broadband access service for a user. The operator network or the PLMN network described in embodiments of this application may be a network compliant with a requirement of a 3rd generation partnership project (3rd generation partnership project, 3GPP) standard, which is referred to as a 3GPP network for short. Generally, the 3GPP network is operated by the operator, and includes but is not limited to a 5th generation (5th generation, 5G) mobile communication network, a 4th generation (4th generation, 4G) mobile communication network, or a 3rd generation (3rd generation, 3G) mobile communication technology network. A future 6th generation (6th generation, 6G) mobile communication network is also included.

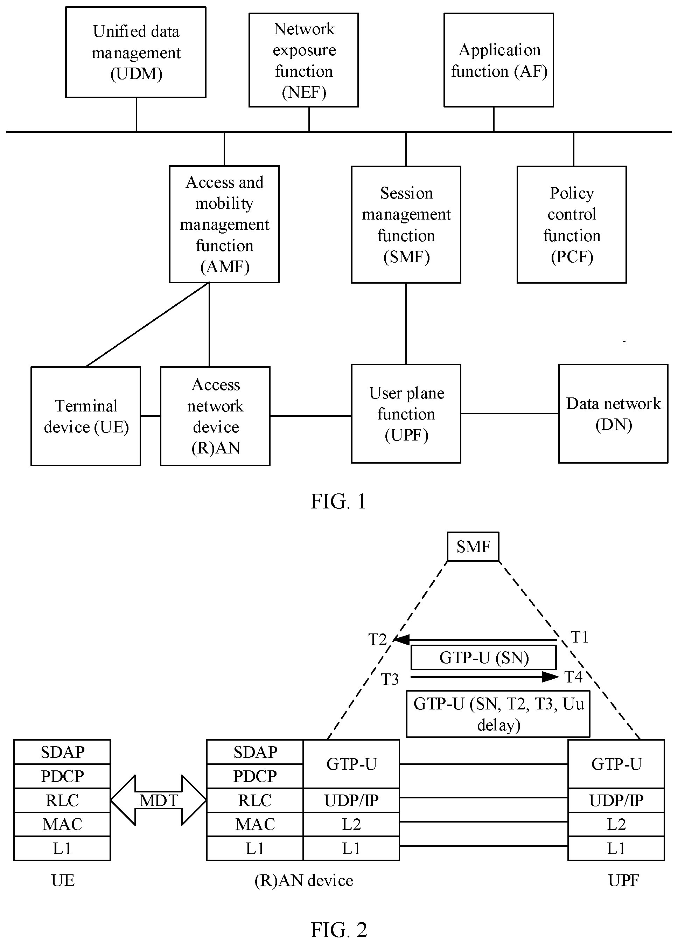

An architecture of a communication system is generally divided into two parts: an access network and a core network. The access network is configured to implement a function related to radio access. The core network mainly implements functions such as user plane management and control plane management by using different network elements. The following uses FIG. 1 as an example to describe a communication system in an embodiment of this application.

FIG. 1 is a diagram of a communication system according to an embodiment of this application. As shown in FIG. 1, the communication system includes an access and mobility management function (access and mobility management function, AMF), a session management function (session management function, SMF) network element, a policy control function (policy control function, PCF) network element, a user plane function (user plane function, UPF) network element, a network exposure function (network exposure function, NEF), an application function (Application Function, AF), unified data management (unified data management, UDM), a terminal device (also referred to as user equipment (user equipment, UE)), an access network device (radio access network, RAN), a data network (data network, DN), and the like.

The following briefly describes network functions (or network elements) shown in FIG. 1.

The terminal device may be referred to as user equipment, an access terminal, a subscriber unit, a subscriber station, a mobile station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a wearable device, a terminal device in a 5G network, and a terminal device in a future evolved public land mobile network. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technology. A main technical feature of the IoT is to connect things to a network by using a communication technology, to implement an intelligent network for human-machine interconnection or thing-thing interconnection.

It should be noted that the terminal device and an access network device may communicate with each other by using an air interface technology (for example, an NR technology or an LTE technology). The terminal device and the terminal device may also communicate with each other by using an air interface technology (for example, an NR technology or an LTE technology).

In embodiments of this application, the terminal device may be replaced with an apparatus configured to implement a function of the terminal device, or may be an apparatus that can support the terminal device in implementing the function, for example, a chip system or a chip. The apparatus may be installed in the terminal device. In addition, the chip system may include a chip, or may include a chip and another discrete component.

The access network device (also referred to as a radio access network) may be a device having a wireless transceiver function. The access network device may be a device that provides a wireless communication function service, is usually located on a network side, and includes but is not limited to: a next generation base station (gNodeB, gNB) in a 5th generation communication system, a next generation base station in a 6th mobile communication system, a base station in a future mobile communication system, an access node in a Wi-Fi system, an evolved nodeB (evolved nodeB, eNB) in an LTE system, a radio network controller (radio network controller, RNC), a nodeB (nodeB, NB), a base station controller (base station controller, BSC), a home base station (for example, a home evolved NodeB, or a home NodeB, HNB), a radio access point, a base band unit (base band unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a control plane CU node, a user plane CU node, and a DU node. The access network device serves a cell, and the user equipment communicates with the base station by using a transmission resource (for example, a frequency domain resource, namely, a spectrum resource) used by the cell. The cell may be a cell corresponding to a base station (for example, the base station), or may belong to a macro base station, or may belong to a base station corresponding to a small cell (small cell). The small cell herein may include a metro cell (metro cell), a micro cell (micro cell), a pico cell (pico cell), a femto cell (femto cell), and the like. These small cells have characteristics of small coverage and low transmitting power, and are applicable to providing a high-rate data transmission service. The access network device may be a macro base station, or may be a micro base station or an indoor base station, or may be a relay node or a donor node, a device that provides a wireless communication service for the user equipment and that is in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the access network device are not limited in embodiments of this application.

The access network device is a device that provides access for the terminal device, and may include a RAN device and an access network (access network, AN) device. The RAN device is mainly a wireless network device in the 3GPP network, and the AN device may be an access network device defined in non-3GPP.

The RAN device is mainly responsible for functions such as radio resource management, quality of service (quality of service, QoS) management, and data compression and encryption on an air interface side. The RAN device may include base stations in various forms, for example, a macro base station, a micro base station (also referred to as a small cell), a relay station, and an access point. In systems using different radio access technologies, a device having a function of a base station may be named differently. For example, the device is referred to as a RAN or a gNB (5G NodeB) in a 5th generation (5th generation, 5G) system, referred to as an evolved NodeB (evolved NodeB, eNB or eNodeB) in an LTE system, and referred to as a NodeB (NodeB) in a 3rd generation (3rd generation, 3G) system.

The AN device is a network element that allows a non-3GPP technology to be used for interconnection and interworking between a terminal device and a 3GPP core network. For example, the non-3GPP technology is, for example, a wireless fidelity (wireless fidelity, Wi-Fi) network, a worldwide interoperability for microwave access (worldwide interoperability for microwave Access, WiMAX) network, or a code division multiple access (code division multiple access, CDMA) network.

The UDM network element (which may also be referred to as a unified data management network element, a unified data management network element entity, a data management device, or a unified data management network element device) is a type of core network device, and is mainly configured for handling of a terminal device identifier, access authentication, registration, mobility management, and the like. The unified data management is a control plane device.

The PCF network element (which may also be referred to as a policy control network element, a policy control function network element, a policy control device, a policy control function network element entity, or the like) is a network element mainly responsible for policy control functions such as session-level or service flow-level charging, quality of service bandwidth guarantee, mobility management, and terminal device policy decision.

The SMF network element (which may also be referred to as a session management function network element) is mainly configured to perform functions such as session management, execution of a control policy delivered by the PCF, UPF selection, and internet protocol address assignment to the terminal device.

The AMF network element (which may also be referred to as an access and mobility management function entity, an access and mobility management device, an access and mobility management function network element, an access management device, or a mobility management device) is a type of core network device, is mainly configured to perform mobility management, access management, and the like, and may be configured to implement functions other than session management in functions of a mobility management entity (mobility management entity, MME), for example, lawful interception, access authorization (or authentication), user equipment registration, mobility management, a tracking area update procedure, reachability detection, selection of a session management function network element, and mobility state transition management.

The UPF network element (which may also be referred to as a user plane device, a user plane function network element, a user plane network element, or a user plane function entity) mainly includes the following functions: user plane-related functions such as data packet routing and transmission, packet detection, service usage reporting, QoS handling, uplink packet detection, and downlink data packet storage.

The AF network element is similar to an application server, and interacts with another 5G core network control plane (NF) and provides a service. The AF may exist for different application services, and may belong to the operator or a trusted third party. For example, a main function of the network element is to notify the PCF of a latest service requirement of a third-party enterprise for an application. The PCF generates a corresponding quality of service (quality of service, QoS) rule based on the requirement, to ensure that a service provided by a network meets the requirement proposed by the third party.

It should be noted that the application server in embodiments of this application includes an application function (AF) and/or an application server (application server, AS), or another device (or a function, a network element, or the like) that can support or provide an application service (or a service). This is not limited in embodiments of this application.

The NEF network element may also be referred to as a network exposure device, a network exposure function entity, a network exposure function network element, a network capability exposure function entity, a network capability exposure function device, a network capability exposure function network element, or a network capability exposure device. The NEF is mainly configured to support capability and event exposure, for example, securely expose, to the outside, a service, a capability, or the like provided by a 3GPP network function.

It should be understood that the RAN, the SMF, the PCF, or the AF in this embodiment of this application may also be referred to as a communication apparatus or a communication device, and may be a general-purpose device or a dedicated device. This is not specifically limited in this application.

It should be further understood that the foregoing names are merely used to distinguish between different functions, and do not represent that these devices are separate physical devices. Specific forms of the foregoing devices are not limited in this application. For example, the devices may be integrated into a same physical device, or may be separately different physical devices. In an actual deployment, network functions (or functions for short), network elements, or devices may be co-deployed. For example, the access and mobility management function network element and the session management function network element may be co-deployed, and the session management function network element and the user plane function network element may be co-deployed. When two functions are co-deployed, interaction between the two functions provided in embodiments of this application becomes an internal operation of the co-deployed functions or may be omitted.

It may be understood that the foregoing function may be a network element in a hardware device, may be a software function running on dedicated hardware, a combination of hardware and software, or a virtualization function instantiated on a platform (for example, a cloud platform).

It should be noted that names of the devices (such as the AF, the SMF, the PCF, and the AMF) in FIG. 1 are merely names, and the names do not constitute a limitation on functions of the devices. In a 5G network and another future network, the devices may alternatively have other names. This is not specifically limited in this application. For example, in a 6G network, terms in 5G may be reused for a part or all of the network elements, or other names may be used. A general explanation is provided herein, and details are not described below again.

In this embodiment of this application, a direction from the terminal device to the application server (or the user plane function network element) is referred to as an uplink direction, and correspondingly, a direction from the application server (or the user plane function network element) to the terminal device is referred to as a downlink direction.

Currently, when the user plane function network element receives a data packet in the downlink direction, the user plane function network element encapsulates the data packet (packets) into a same quality of service flow (QoS flow) based on a flow processing rule (Packet Detection Rule, PDR) preconfigured by the session management function network element. A PDR of the session management function network element is obtained from a policy and charging control rule (policy and charging control rule, PCC Rules) of the policy management function network element. A QoS identifier (QoS flow identifier, QFI) of each QoS flow is associated with a QoS profile (QoS profile). The network side uses, based on a QoS parameter (QoS parameters) in the QoS profile, same QoS guarantee for data packets belonging to a same QoS flow. The QoS guarantee includes but is not limited to a delay, a forwarding priority, a packet loss rate, or the like.

The policy management function network element generates a PCC rule, and then the session management function network element obtains a QoS requirement (QoS requirements) of a corresponding QoS flow based on the PCC rule. Generally, the QoS requirement may be represented by a QoS parameter. In the PCC rule, a packet delay budget (packet delay budget, PDB) may be used to define a transmission delay requirement.

Delay measurement may be implemented through QoS monitoring (QoS monitoring). The QoS monitoring may be implemented through flow-level monitoring or node-level monitoring.

The flow-level monitoring may be that the SMF network element sends a QoS monitoring policy of a QoS flow to the UPF network element through a protocol data unit (Protocol Data Unit, PDU) session establishment or modification procedure. Then, the UPF network element initiates data packet delay measurement between the (R)AN device and the UPF network element, and the (R)AN device initiates uplink/downlink data packet delay measurement on a Uu interface.

When the UPF network element sends a downlink data packet, if all user plane nodes in the communication system are time-synchronized, the UPF network element adds a sending timestamp (for example, T1 in FIG. 2) to a downlink packet. The (R)AN device calculates a downlink delay based on a packet receiving time (for example, T2 in FIG. 2), and sends the downlink delay and a Uu interface delay to the UPF network element in an uplink packet.

When there is no uplink service data packet, the (R)AN device may send a dummy uplink data packet to the UPF network element as a monitoring response packet. The UPF network element may calculate each transmission delay of the uplink and downlink packets based on information reported by the (R)AN device, a time (for example, T3 in FIG. 2) at which the (R)AN device sends the uplink packet, and a time (for example, T4 in FIG. 2) at which the data packet is received.

If the UPF network element and the (R)AN device do not support time synchronization, the UPF network element records a local time at which the downlink packet is sent. The (R)AN device provides, for the UPF network element through an N3 interface, an uplink/downlink data packet delay measurement result of a Uu interface and a local packet receiving and sending time. The anchor UPF network element may calculate a packet loopback time based on a local time at which the uplink packet is received and the information reported by the (R)AN device. If uplink and downlink delays between the (R)AN device and the UPF network element are symmetric, a one-way delay can be obtained by dividing a total delay by 2.

The UPF network element may report a QoS monitoring result to the SMF based on a specific condition (for example, an SMF reporting threshold is reached), for subsequent application layer alarm reporting, another QoS policy decision, or the like.

The node-level QoS monitoring may provide a node-level delay estimation result. Different from the foregoing QoS flow-level QoS monitoring, the node-level monitoring is to perform core network packet delay estimation based on a general packet radio system tunneling protocol for the user plane (general packet radio system tunneling protocol for the user plane, GTP-U) Echo request/response in a user plane transmission path. This may be simply understood as performing core network packet delay estimation on an uplink/downlink data packet delay between the (R)AN device and the UPF network element in the foregoing QoS flow level by using a GTP-U Echo request/response in the user plane transmission path. The GTP-U is configured to carry user data in a GPRS core network and between a radio access network and the core network. The transmitted user data may be any type of data packet in Internet Protocol version 4 (internet protocol version, IPv4), Internet Protocol version 6 (internet protocol version, IPv6), Ethernet (Ethernet), or Point-to-Point Protocol (Point-to-Point Protocol, PPP).

FIG. 1 above shows a simplified diagram of an architecture of a communication system. Actually, architectures of the communication system may be slightly different in different scenarios, for example, a non-roaming scenario and a roaming scenario. The non-roaming scenario may be further divided into an architecture based on a service-based interface and an architecture based on a reference point, and the roaming scenario may also be divided into an architecture based on a service-based interface and an architecture based on a reference point. The roaming scenario may be further subdivided into a local breakout (local breakout, LBO) roaming scenario and a home routed (home routed, HR) roaming scenario. The LBO roaming scenario may also be divided into an architecture based on a service-based interface and an architecture based on a reference point. The HR roaming scenario may also be divided into an architecture based on a service-based interface and an architecture based on a reference point. Regardless of an architecture, the delay measurement method provided in embodiments of this application is applicable.

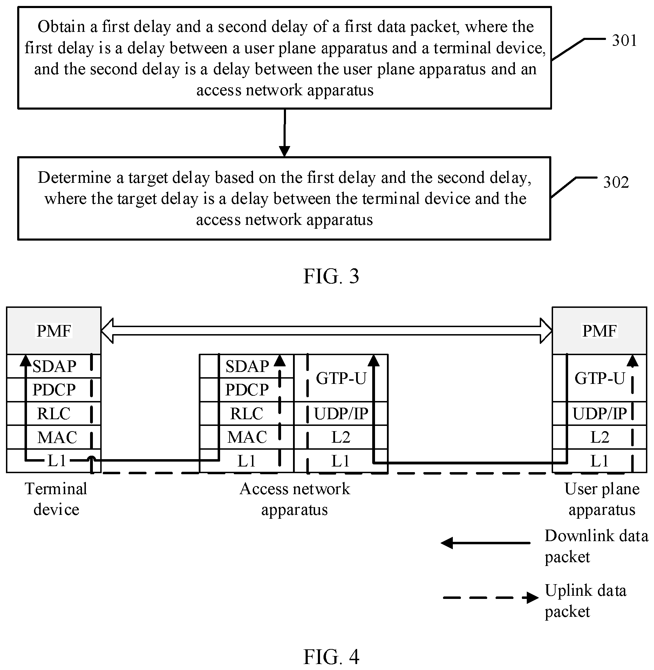

The following describes the delay measurement method provided in embodiments of this application with reference to the accompanying drawings. The process may be performed by a user plane apparatus, or may be performed by another apparatus (for example, an SMF network element, a PCF network element, or an AF network element) in a core network. As shown in FIG. 3, an embodiment of the delay measurement method provided in embodiments of this application includes the following steps.

301: Obtain a first delay and a second delay of a first data packet, where the first delay is a delay between the user plane apparatus and a terminal device, and the second delay is a delay between the user plane apparatus and an access network apparatus.

In this application, the user plane apparatus may be an apparatus that can perform a user plane function in the core network, for example, a UPF network element. The access network apparatus may be various types of base stations, and may be understood with reference to the foregoing description of the access network device. The terminal device may be an apparatus having an air interface transmission capability or a set including an apparatus having an air interface transmission capability and another apparatus.

In this application, the first delay may be a delay measured by using a user plane protocol between the terminal device and the user plane apparatus, for example, a delay that is between the terminal device and the user plane apparatus and that is measured by using a performance measurement function (performance measurement functionality, PMF) protocol. The delay may be a round-trip time (round trip time, RTT) between the terminal device and the user plane apparatus, an uplink delay, or a downlink delay. The RTT is also referred to as a round-trip delay.

In this application, the second delay may be a delay that is between the user plane apparatus and the access network apparatus and that is measured by using a QoS monitoring (QoS Monitoring) process. The delay may be an RTT, an uplink delay, or a downlink delay between the user plane apparatus and the access network apparatus.

For the PMF protocol and a relationship between QoS monitoring and the terminal device, the access network apparatus, and the user plane apparatus, refer to FIG. 4 for understanding. As shown in FIG. 4, the terminal device sequentially includes a layer 1 (layer 1, L1), a media access control (medium access control, MAC) layer, a radio link control (radio link control, RLC) layer, a packet data convergence protocol (packet data convergence protocol, PDCP) layer, and a service data application protocol (service data application protocol, SDAP) layer from bottom to top. The user plane apparatus sequentially includes a layer 1 (L1), a layer 2 (L2), a user datagram protocol/Internet protocol (user datagram protocol/internet protocol, UDP/IP) layer, and a GTP-U layer from bottom to top. In addition, upper layers of the terminal device and the user plane apparatus each include a PMF protocol layer. A layer structure of the access network apparatus facing the terminal device is the same as that of the terminal device, and a layer structure of the access network apparatus facing the user plane apparatus is the same as that of the user plane apparatus.

L1 may be a physical layer, and L2 may be a network layer.

The MAC layer is configured to arbitrate a network capacity.

The RLC layer is configured for error correction and flow control.

The PDCP layer is configured to process packet data, for example, an IP data stream, of a bearer network layer on an air interface.

The SDAP layer is configured for QoS flow processing across air interfaces, for example, mapping a specific QoS flow in a PDU session to a corresponding data radio bearer.

The UDP/IP layer is configured for data transmission.

The GTP-U layer is configured to carry user data in a GPRS core network and between a radio access network and the core network.

302: Determine a target delay based on the first delay and the second delay, where the target delay is a delay between the terminal device and the access network apparatus.

In this application, the target delay may be an air interface delay between the terminal device and the access network apparatus, and the target delay may be a difference between the first delay and the second delay.

In this embodiment of this application, for each data packet, the first delay between the terminal device and the user plane apparatus and the second delay between the user plane apparatus and the access network apparatus may be obtained, and then the air interface delay between the terminal device and the access network apparatus may be obtained through calculation by using the first delay and the second delay. In this manner of determining the air interface delay, it is not necessary to specially send a data packet carrying a timestamp between the terminal device and the access network apparatus for a plurality of times for measurement, so that overheads caused by measuring the air interface delay are reduced, thereby improving air interface capacities of the access network apparatus and the terminal device.

The first delay, the second delay, and the target delay may each be an RTT, an uplink delay, or a downlink delay. The following separately describes delay measurement processes in different cases.

### 1.1. RTT delay measurement

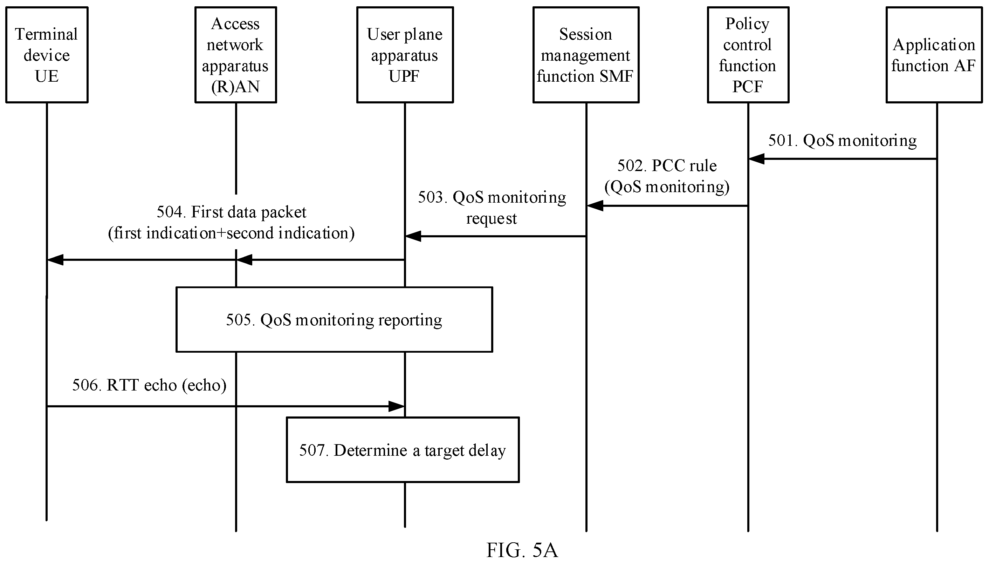

As shown in FIG. 5A, another embodiment of delay measurement provided in an embodiment of this application includes the following steps.

501. The AF network element sends a quality of service monitoring subscription request to the PCF network element.

The subscription request may optionally carry a per-packet quality of service monitoring type (per-packet QoS Monitoring type), where the per-packet QoS monitoring type indicates that quality of service monitoring needs to be performed on each data packet. The per-packet QoS Monitoring type may be segmented per-packet QoS Monitoring. The segmented per-packet QoS Monitoring may be per-packet QoS Monitoring performed on a communication link between the user plane apparatus and the access network apparatus, or certainly, may be per-packet QoS Monitoring performed on a communication link between the user plane apparatus and the terminal device, or may be per-packet QoS Monitoring performed on a communication link between the access network apparatus and the terminal device. Certainly, the per-packet QoS monitoring may alternatively be performed on all the links.

502. The PCF network element sends a PCC rule to the SMF network element, where the PCC rule includes per-packet quality of service monitoring information.

The per-packet quality of service monitoring information may be a per-packet QoS Monitoring type.

503. The SMF network element sends a QoS monitoring request to the UPF network element.

The QoS monitoring request includes a per-packet QoS Monitoring type.

504. The UPF network element sends a first data packet, where the first data packet includes a first indication and a second indication.

The first indication indicates the access network apparatus to perform quality of service QoS monitoring, the first indication may be a QoS monitoring indication (QoS monitoring indication), and the second indication may be an RTT indication.

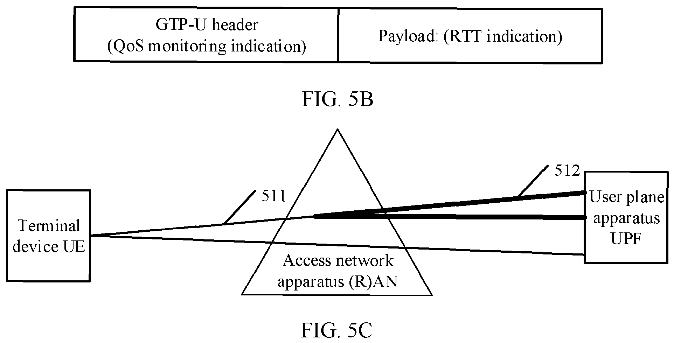

For a structure of the first data packet, refer to FIG. 5B for understanding. As shown in FIG. 5B, a header of the first data packet is that a GTP-U header includes a QoS monitoring indication, and a payload (payload) part includes an RTT indication.

505. The access network apparatus reports QoS Monitoring information to the UPF network element.

Step 505 may be understood with reference to how to determine a delay through QoS Monitoring in the foregoing descriptions about FIG. 2.

506. The terminal device sends an RTT echo (Echo) to the UPF network element through the access network apparatus.

The sending of the RTT echo may be that the PMF in the terminal device sends a PMF-Echo Request message to the PMF in the UPF network element via a user plane, and the PMF in the UPF responds to each PMF with a PMF-Echo Response message. Similarly, the PMF in the UPF may alternatively send a PMF-Echo Request message to the PMF in the UE via a user plane, and the PMF in the UE responds to each PMF with a PMF-Echo Response message. Certainly, a new protocol layer may alternatively be used to implement a same function. This is not limited in this application.

507. The UPF network element determines a target delay.

The UPF network element may determine an RTT (the first delay) between the access network apparatus and the UPF network element through the QoS monitoring in step 505, may determine an RTT (the second delay) between the terminal device and the UPF network element through the RTT response, and then obtain the target delay, that is, an air interface RTT between the terminal device and the access network apparatus, by calculating a difference between the first delay and the second delay.

For how to determine that the first delay and the second delay are delays corresponding to a same data packet, the first delay and the second delay corresponding to the same data packet may be determined by associating the first information and the second information corresponding to the first data packet. In an RTT delay measurement process, the first information may be an RTT echo, and is used to determine the first delay, that is, an RTT between the UPF network element and the terminal device. The second information may be QoS monitoring information of an RTT, and is used to determine the second delay, that is, an RTT between the UPF network element and the access network apparatus.

The association relationship between the first information and the second information of the first data packet may be maintained in multiple manners. For example, the association relationship between the first information and the second information of the first data packet may be maintained by using a first identifier. The first identifier may be a number or an index used to mark a data packet sent by the user plane apparatus, or may be another identifier, for example, a sequence number (sequence number, SN). For example, the first delay and the second delay corresponding to the first data packet may be determined by using an application layer SN of an RTT Request at the PMF layer and a corresponding GTP-U SN, and the air interface RTT (the target delay) may be obtained by subtracting a delay (the second delay) of the QoS Monitoring corresponding to the GTP-U SN from an E2E delay (the first delay) corresponding to the application layer SN of the RTT Request at the PMF layer. Optionally, delays of the RTT echo and the QoS Monitoring may be associated via an original SN, or may be associated via a new SN. When the first information and the second information are associated by using a new SN, the first information and the second information may further carry a correspondence between the new SN and the original SN, and the UPF network element may determine the first delay and the second delay corresponding to a same data packet by using the correspondence between the new SN and the original SN, and then determine the corresponding air interface delay.

For a process of determining the air interface RTT, refer to FIG. 5C for understanding. As shown in FIG. 5C, a delay 511 represents an RTT between the user plane apparatus and the terminal device, and a delay 512 represents an RTT between the user plane apparatus and the access network apparatus. In this case, the air interface RTT, that is, the RTT between the access network apparatus and the terminal device, may be obtained by subtracting the delay 512 from the delay 511.

According to the solution provided in this embodiment of this application, the user plane apparatus can complete two measurements by using one data packet, and can measure both the first delay and the second delay. The first delay and the second delay are associated by using the first identifier, and the UPF network element may accurately calculate a corresponding air interface delay of the data packet. In this way, measurement overheads of the air interface delay are reduced, and accuracy of the air interface delay measurement can be improved.

### 1.2. RTT delay measurement

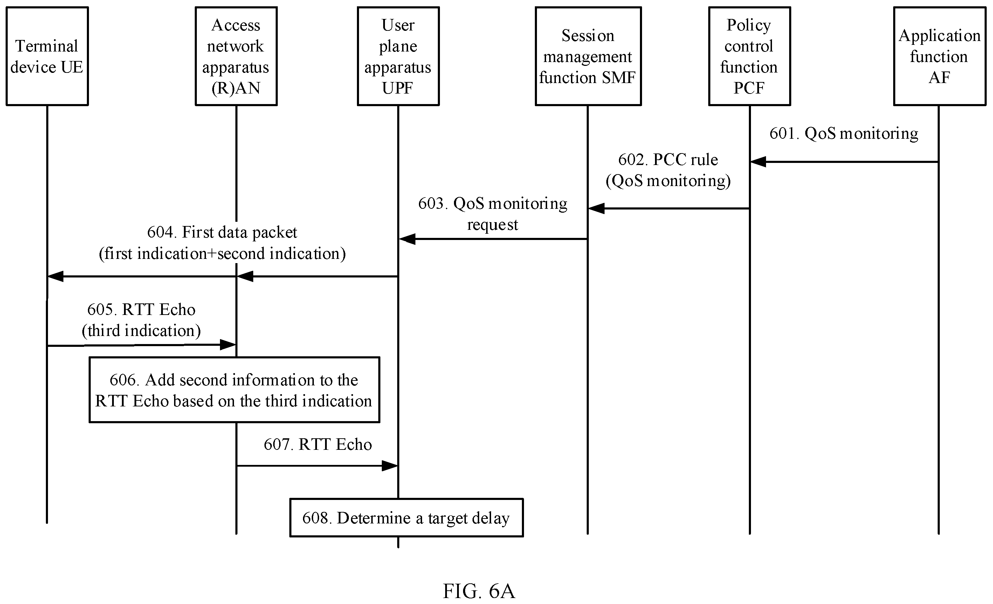

As shown in FIG. 6A, another embodiment of delay measurement provided in an embodiment of this application includes the following steps.

In this embodiment of this application, step 601 to step 604 are the same as step 501 to step 504, and may be understood with reference to the foregoing descriptions.

605. The terminal device sends an RTT echo to the access network apparatus, where the RTT echo includes a third indication.

The third indication indicates the access network apparatus to add the second information to a packet in which the first information is located.

606. The access network apparatus adds the second information to the RTT echo based on the third indication.

The second information may be QoS monitoring information of an RTT, and is used to determine an RTT between the access network apparatus and the UPF network element.

607. The access network apparatus sends the RTT echo including the first information and the second information to the access network apparatus.

The first information and the second information are sent through a same packet. Therefore, after receiving the packet, the user plane apparatus may directly calculate the first delay and the second delay, to obtain the air interface delay without searching for an association relationship, thereby further improving a calculation speed of the air interface delay.

608. The UPF network element determines the target delay based on the RTT echo.

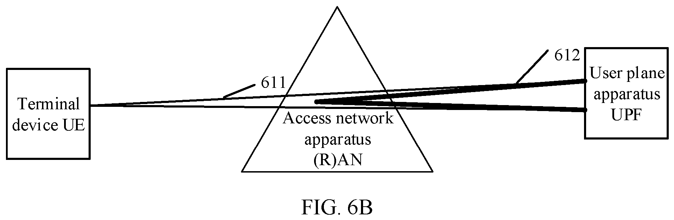

Step 608 may be understood with reference to step 507. For an air interface delay of the RTT, refer to FIG. 6B for understanding. A delay 611 represents an RTT between the user plane apparatus and the terminal device, and a delay 612 represents an RTT between the user plane apparatus and the access network apparatus. In this case, the air interface RTT, that is, the RTT between the access network apparatus and the terminal device, may be obtained by subtracting the delay 612 from the delay 611.

In embodiments of FIG. 5A and FIG. 6A provided in embodiments of this application, an air interface RTT delay may be obtained by using end-to-end per-packet delay monitoring between the terminal device and the UPF network element and per-packet delay monitoring between the access network apparatus and the UPF network element, so that overheads caused by air interface delay measurement are reduced, thereby improving air interface capacities of the terminal device and the access network apparatus.

### 2. Uplink delay measurement

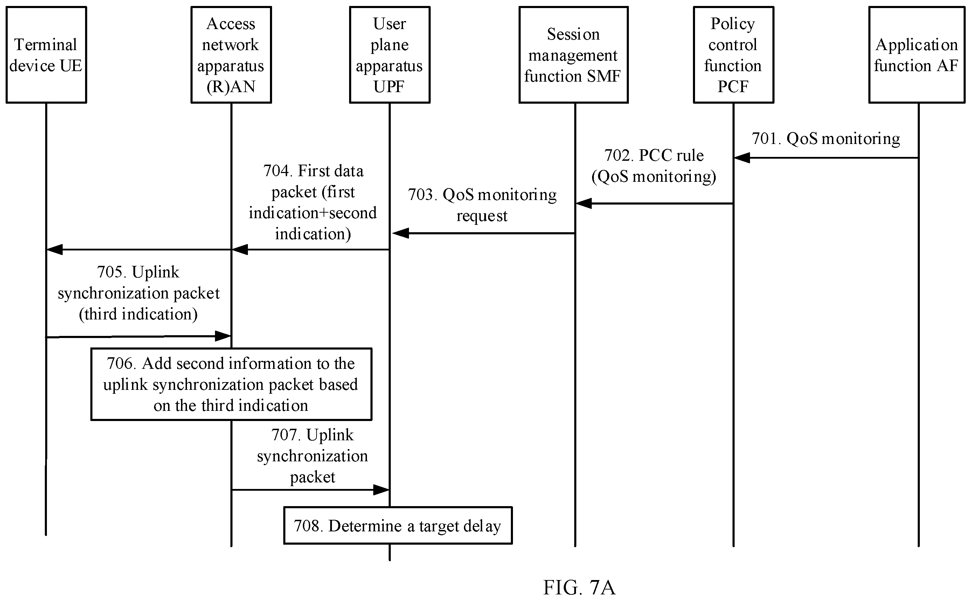

As shown in FIG. 7A, another embodiment of delay measurement provided in an embodiment of this application includes the following steps.

In this embodiment of this application, step 701 to step 703 are the same as step 501 to step 503, and may be understood with reference to the foregoing descriptions.

704. The UPF network element sends a first data packet, where the first data packet includes a first indication and a second indication.

Different from step 504, the second indication indicates to send an uplink synchronization packet.

705. The terminal device/DS-TT sends an uplink synchronization packet, where the uplink synchronization packet includes a third indication.

The third indication indicates the access network apparatus to add the second information to the uplink synchronization packet.

When the terminal device is associated with a device-side time sensitive network translator (device-side time sensitive network translator, DS-TT), and the DS-TT is connected to the terminal device, the uplink synchronization packet may be sent by the DS-TT, and the uplink synchronization packet is sent to the access network apparatus through an air interface of the terminal device.

706. The access network apparatus adds the second information to the uplink synchronization packet based on the third indication.

In an uplink delay measurement process, the second information is uplink QoS monitoring information, and is used to determine an uplink delay between the access network apparatus and the UPF network element.

707. The access network apparatus sends the uplink synchronization packet including the first information and the second information to the UPF network element.

In an uplink delay measurement process, the first information may be a timestamp at which the terminal device sends an uplink synchronization packet, and is used to determine the first delay, that is, an uplink delay between the terminal device and the UPF network element, by using the timestamp when the UPF network element receives the uplink synchronization packet.

708. The UPF network element determines the target delay based on the uplink synchronization packet.

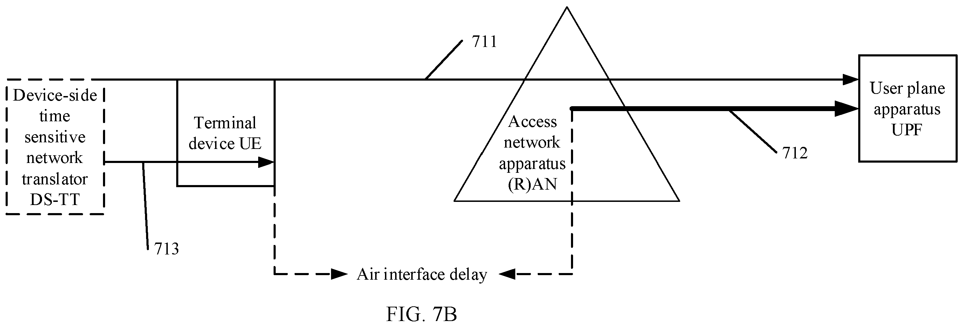

For a process of determining the uplink delay of the air interface, refer to FIG. 7B for understanding. As shown in FIG. 7B, an example in which the terminal device is associated with the DS-TT and the terminal device is used. A delay 711 represents an uplink delay between the DS-TT and the user plane apparatus, a delay 712 represents an uplink delay between the access network apparatus and the user plane apparatus, and a delay 713 represents an air interface delay between the DS-TT and the terminal device. It can be learned from FIG. 7B that the uplink delay of the air interface = delay 711 - delay 712 - delay 713.

Certainly, if the terminal device is not associated with the DS-TT and instead sends the uplink synchronization packet directly through the air interface similar to that in FIG. 5C, there is no delay 713. In this case, the uplink delay of the air interface = delay 711 - delay 712.

In this embodiment of this application, it can be learned from the procedures described in FIG. 7A and FIG. 7B that the uplink delay of the air interface is obtained through end-to-end per-packet delay monitoring between the terminal device and the UPF network element and per-packet delay monitoring between the access network apparatus and the UPF network element, so that overheads caused by measuring the uplink delay of the air interface are reduced, thereby improving air interface capacities of the terminal device and the access network apparatus.

### 3. Downlink delay measurement

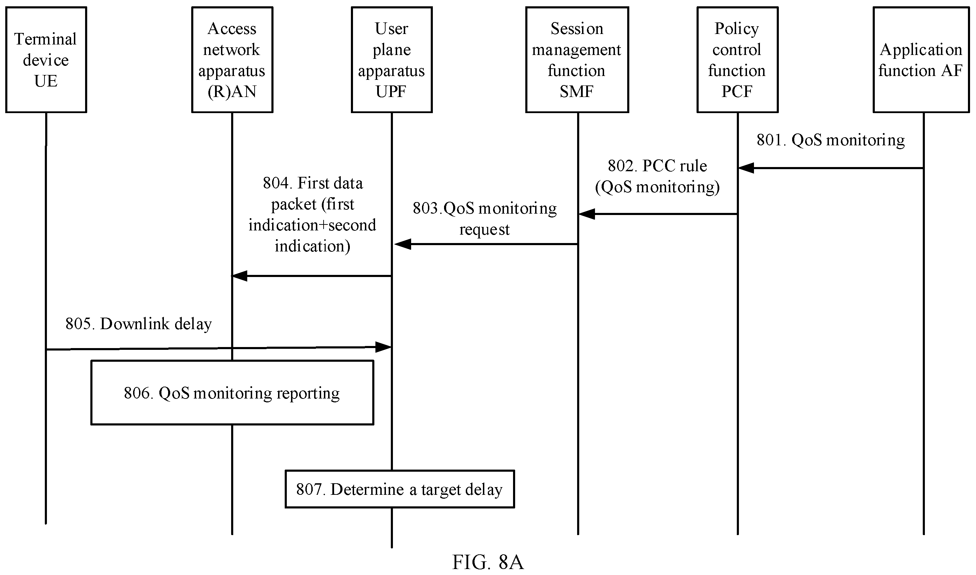

As shown in FIG. 8A, another embodiment of delay measurement provided in an embodiment of this application includes the following steps.

In this embodiment of this application, step 801 to step 803 are the same as step 501 to step 503, and may be understood with reference to the foregoing descriptions.

804. The UPF network element sends a first data packet, where the first data packet includes a first indication and a second indication.

Different from step 504, the second indication in the first data packet indicates to send a downlink synchronization packet, the downlink synchronization packet further includes a downlink delay indication, and the downlink delay indication indicates the terminal device to report a downlink delay between the user plane apparatus and the terminal device.

805. The terminal device/DS-TT sends the downlink delay to the UPF network element through the access network apparatus.

In a downlink delay measurement process, the first information in the embodiment described in FIG. 3 may be a downlink delay.

806. The access network apparatus reports the QoS Monitoring information to the UPF network element.

Step 805 may be understood with reference to how to determine a delay through QoS Monitoring in the foregoing descriptions about FIG. 2. The QoS Monitoring information is the second information in the embodiment described in FIG. 3. In a downlink delay measurement process, the second information is downlink QoS monitoring information, and is used to determine a downlink delay between the UPF network element and the access network apparatus.

807. The UPF network element determines a target delay.

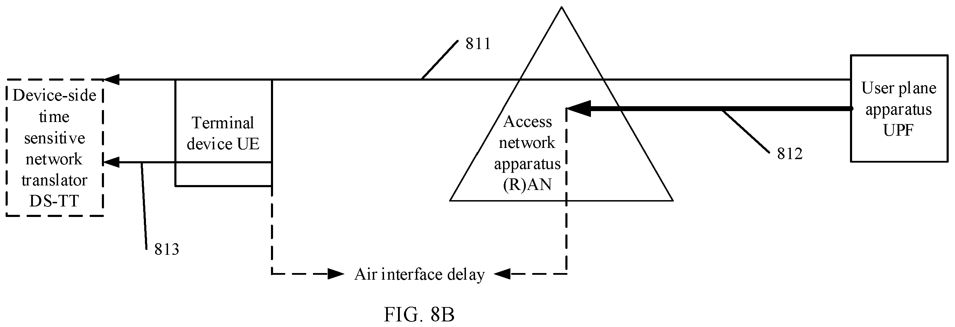

For a process of determining the downlink delay of the air interface, refer to FIG. 8B for understanding. As shown in FIG. 8B, an example in which the terminal device is associated with the DS-TT is used. A delay 811 represents a downlink delay between the DS-TT and the user plane apparatus, a delay 812 represents a downlink delay between the access network apparatus and the user plane apparatus, and a delay 813 represents an air interface delay between the DS-TT and the terminal device. It can be learned from FIG. 8B that the downlink delay of the air interface = delay 811 - delay 812 - delay 813.

Certainly, if the terminal device is not associated with the DS-TT and instead receives the downlink synchronization packet directly through the air interface similar to that in FIG. 5C, there is no delay 813. In this case, the downlink delay of the air interface = delay 811 - delay 812.

In this embodiment of this application, it can be learned from the procedures described in FIG. 8A and FIG. 8B that the downlink delay of the air interface may be obtained through end-to-end per-packet delay monitoring between the terminal device and the UPF network element and per-packet delay monitoring between the access network apparatus and the UPF network element, so that overheads caused by measuring the downlink delay of the air interface are reduced, thereby improving air interface capacities of the terminal device and the access network apparatus.

In the foregoing several embodiments, the second indication indicates different content in different forms, so that the terminal device returns corresponding RTT response information, uplink synchronization packet, or downlink delay, thereby completing measurement of the RTT, the uplink delay, or the downlink delay.

In this embodiment of this application, a third delay between the user plane apparatus and an application server may be further obtained, and a delay between the terminal device and the application server is determined based on the first delay and the third delay.

It should be noted that the foregoing process of determining the target delay is described by using the UPF network element as an example. Actually, the process may be performed by another apparatus in the core network. If the process is performed by the another apparatus, only the first delay and the second delay need to be obtained from the user plane apparatus.

The foregoing describes the communication system and the delay measurement method in embodiments of this application. The following describes a communication apparatus in embodiments of this application.

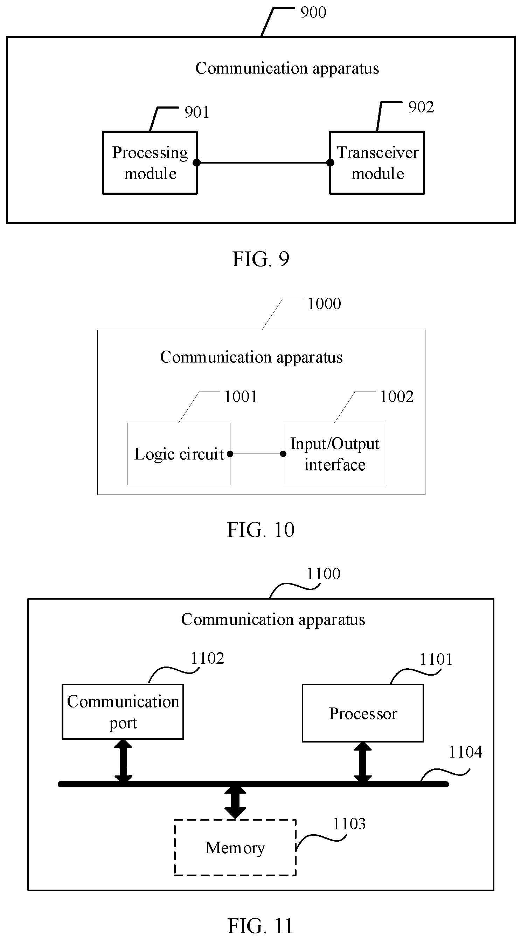

FIG. 9 is a diagram of an implementation of a communication apparatus according to this application. The communication apparatus 900 includes a processing module 901 and a transceiver module 902. The communication apparatus 900 can implement functions of the communication apparatus (including the user plane apparatus, the access network apparatus, or the terminal device) in the foregoing method embodiments, and therefore can also implement beneficial effects of the foregoing method embodiments. In this embodiment of this application, the communication apparatus 900 may be a user plane apparatus, an access network apparatus, or a terminal device, or may be an integrated circuit or an element inside a user plane apparatus, an access network apparatus, or a terminal device, for example, a chip, or may be an integrated circuit or an element integrated inside a user plane apparatus, an access network apparatus, or a terminal device.

FIG. 10 is a diagram of another structure of a communication apparatus 1000 according to this application. The communication apparatus 1000 includes at least an input/output interface 1002. The communication apparatus 1000 may be a chip or an integrated circuit.

Optionally, the communication apparatus further includes a logic circuit 1001.

The transceiver module 902 shown in FIG. 9 may be a communication interface. The communication interface may be the input/output interface 1002 in FIG. 10, and the input/output interface 1002 may include an input interface and an output interface. Alternatively, the communication interface may be a transceiver circuit, and the transceiver circuit may include an input interface circuit and an output interface circuit.

Optionally, when the communication apparatus 1000 is the user plane apparatus, the access network apparatus, or the terminal device in the foregoing embodiment, the input/output interface 1002 is configured to input/output information, and the logic circuit 1001 is configured to perform the method performed by the user plane apparatus, the access network apparatus, or the terminal device in the foregoing embodiment.

The logic circuit 1001 and the input/output interface 1002 may further perform other steps performed by the communication apparatus in any embodiment and implement corresponding beneficial effects. Details are not described herein again.

In a possible implementation, the processing module 901 shown in FIG. 9 may be the logic circuit 1001 in FIG. 10.

Optionally, the logic circuit 1001 may be a processing apparatus, and some or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field programmable gate arrays (field-programmable gate array, FPGA), an application-specific integrated chip (application specific integrated circuit, ASIC), a system-on-a-chip (system-on-a-chip, SoC), a central processing unit (central processor unit, CPU), a network processor (network processor, NP), a digital signal processing circuit (digital signal processor, DSP), a micro controller unit (micro controller unit, MCU), a programmable logic device (programmable logic device, PLD), or another integrated chip, or any combination of the foregoing chips or processors.

FIG. 11 shows a communication apparatus 1100 in the foregoing embodiments according to embodiments of this application. The communication apparatus 1100 may be specifically the communication apparatus used as a user plane apparatus, an access network apparatus, or a terminal device in the foregoing embodiments.

In a possible diagram of a logic structure of the communication apparatus 1100, the communication apparatus 1100 may include but is not limited to at least one processor 1101 and a communication port 1102.

Further, optionally, the apparatus may further include at least one of a memory 1103 and a bus 1104. In this embodiment of this application, the at least one processor 1101 is configured to perform control processing on an action of the communication apparatus 1100.

In addition, the processor 1101 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 1100 shown in FIG. 11 may be specifically configured to implement steps implemented by the user plane apparatus, the access network apparatus, or the terminal device in the foregoing method embodiments, and implement corresponding technical effects of the user plane apparatus, the access network apparatus, or the terminal device. For specific implementations of the communication apparatus shown in FIG. 11, refer to the descriptions in the foregoing method embodiments. Details are not described herein again.

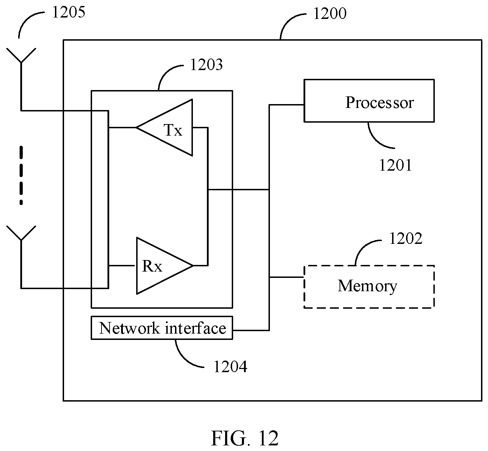

FIG. 12 is a diagram of a structure of a communication apparatus 1200 in the foregoing embodiments according to embodiments of this application. The communication apparatus 1200 may be specifically the communication apparatus used as a user plane apparatus, an access network apparatus, or a terminal device in the foregoing embodiments. For a structure of the communication apparatus, refer to the structure shown in FIG. 12.

The communication apparatus 1200 includes at least one processor 1201 and at least one network interface 1204. Further, optionally, the communication apparatus further includes at least one memory 1202, at least one transceiver 1203, and one or more antennas 1205. The processor 1201, the memory 1202, the transceiver 1203, and the network interface 1204 are connected, for example, through a bus. In this embodiment of this application, the connection may include various interfaces, transmission lines, buses, or the like. This is not limited in this embodiment. The antenna 1205 is connected to the transceiver 1203. The network interface 1204 is configured to enable the communication apparatus to communicate with another communication device through a communication link. For example, the network interface 1204 may include a network interface between the communication apparatus and a core network device, for example, an S1 interface. The network interface may include a network interface between the communication apparatus and another communication apparatus (for example, another radio access network or a core network device), for example, an X2 or Xn interface.

The processor 1201 is mainly configured to: process a communication protocol and communication data; and control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control the entire communication apparatus, execute the software program, and process the data of the software program. Functions of the baseband processor and the central processing unit may be integrated into the processor 1201 in FIG. 12. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 1202 may exist independently, and is connected to the processor 1201. Optionally, the memory 1202 and the processor 1201 may be integrated together, for example, integrated into one chip. The memory 1202 can store program code for executing the technical solutions in embodiments of this application, and the processor 1201 controls execution of the program code. Various types of executed computer program code may also be considered as drivers of the processor 1201.

FIG. 12 shows only one memory and one processor. In an actual terminal device/access network apparatus, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 1203 may be configured to support receiving or sending of a radio frequency signal between the communication apparatus and a terminal, and the transceiver 1203 may be connected to the antenna 1205. The transceiver 1203 includes a transmitter Tx and a receiver Rx. Specifically, the one or more antennas 1205 may receive a radio frequency signal. The receiver Rx of the transceiver 1203 is configured to: receive the radio frequency signal from the antenna, convert the radio frequency signal into a digital baseband signal or a digital intermediate frequency signal, and provide the digital baseband signal or the digital intermediate frequency signal to the processor 1201, so that the processor 1201 performs further processing, for example, demodulation processing and decoding processing, on the digital baseband signal or the digital intermediate frequency signal. In addition, the transmitter Tx in the transceiver 1203 is further configured to: receive a modulated digital baseband signal or digital intermediate frequency signal from the processor 1201, convert the modulated digital baseband signal or digital intermediate frequency signal into a radio frequency signal, and send the radio frequency signal through the one or more antennas 1205. Specifically, the receiver Rx may selectively perform one-level or multi-level down frequency mixing and analog-to-digital conversion on the radio frequency signal to obtain the digital baseband signal or the digital intermediate frequency signal. A sequence of the down frequency mixing and the analog-to-digital conversion is adjustable. The transmitter Tx may selectively perform one-level or multi-level up frequency mixing and digital-to-analog conversion on the modulated digital baseband signal or digital intermediate frequency signal, to obtain the radio frequency signal. A sequence of the up frequency mixing and the digital-to-analog conversion is adjustable. The digital baseband signal and the digital intermediate frequency signal may be collectively referred to as a digital signal.

The transceiver 1203 may also be referred to as a transceiver module, a transceiver machine, a transceiver apparatus, or the like. Optionally, a component configured to implement a receiving function in the transceiver module may be considered as a receiving unit, and a component configured to implement a sending function in the transceiver module may be considered as a sending unit. That is, the transceiver module includes the receiving unit and the sending unit. The receiving unit may also be referred to as a receiver, an input port, a receiving circuit, or the like. The sending unit may be referred to as a transmitter, a transmitter machine, a transmitting circuit, or the like.

It should be noted that the communication apparatus 1200 shown in FIG. 12 may be specifically configured to implement steps implemented by the user plane apparatus, the access network apparatus, or the terminal device in the foregoing method embodiments, and implement corresponding technical effects of the user plane apparatus, the access network apparatus, or the terminal device. For specific implementations of the communication apparatus 1200 shown in FIG. 12, refer to the descriptions in the foregoing method embodiments. Details are not described herein again.

An embodiment of this application further provides a computer-readable storage medium storing one or more computer executable instructions. When the computer-executable instructions are executed by a processor, the processor performs the method in the possible implementations of the user plane apparatus, the access network apparatus, or the terminal device in the foregoing embodiments.

An embodiment of this application further provides a computer program product (or referred to as a computer program) stored in one or more computers. When the computer program product is executed by a processor, the processor performs the method in the possible implementations of the user plane apparatus, the access network apparatus, or the terminal device in the foregoing embodiments.

An embodiment of this application further provides a chip system. The chip system includes at least one processor, configured to support a communication apparatus in implementing the functions in the foregoing possible implementations of the communication apparatus. Optionally, the chip system further includes an interface circuit. The interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the user plane apparatus, the access network apparatus, or the terminal device in the foregoing method embodiments.

An embodiment of this application further provides a communication system. The communication system includes the user plane apparatus, the access network apparatus, and the terminal device in any one of the foregoing embodiments.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing module, or each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or a part making contributions, or all or some of the technical solutions may be implemented in a form of software product. A computer software product is stored in a storage medium and includes several instructions for instructing a computer device (which may be a personal computer, a server, a radio access network, or the like) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A delay measurement method, comprising:
obtaining a first delay and a second delay of a first data packet, wherein the first delay is a delay between a user plane apparatus and a terminal device, and the second delay is a delay between the user plane apparatus and an access network apparatus; and
determining a target delay based on the first delay and the second delay, wherein the target delay is a delay between the terminal device and the access network apparatus.

2. The method according to claim 1, wherein the first delay is a round-trip delay between the user plane apparatus and the terminal device;
the second delay is a round-trip delay between the user plane apparatus and the access network apparatus; and
the target delay is a round-trip delay between the terminal device and the access network apparatus.

3. The method according to claim 1, wherein the first delay is an uplink delay between the terminal device and the user plane apparatus;
the second delay is an uplink delay between the access network apparatus and the user plane apparatus; and
the target delay is an uplink delay between the terminal device and the access network apparatus.

4. The method according to claim 1, wherein the first delay is a downlink delay between the user plane apparatus and the terminal device;
the second delay is a downlink delay between the user plane apparatus and the access network apparatus; and
the target delay is a downlink delay between the terminal device and the access network apparatus.

5. The method according to any one of claims 1 to 4, wherein the obtaining the first delay and the second delay of the first data packet comprises:
sending, by the user plane apparatus, the first data packet, wherein the first data packet comprises a first indication and a second indication, the first indication indicates the access network apparatus to perform quality of service QoS monitoring, the second indication indicates the terminal device to report first information, and the first information is related to the first delay; and
receiving, by the user plane apparatus, the first information and second information, wherein the second information is QoS monitoring information of the access network apparatus, the first information is used to determine the first delay, and the second information is used to determine the second delay.

6. The method according to claim 5, wherein there is an association relationship between the first information and the second information of the first data packet.

7. The method according to claim 6, wherein the first information and the second information are associated by using a first identifier.

8. The method according to claim 6 or 7, wherein the first information and the second information are comprised in a same packet.

9. The method according to claim 4 or 5, wherein when the terminal device is associated with a device-side time sensitive network translator DS-TT, the DS-TT is connected to the terminal device, the first delay is a delay between the DS-TT and the user plane apparatus, and the target delay is a delay between the terminal device and the access network apparatus.

10. The method according to any one of claims 1 to 9, wherein the method further comprises:
obtaining a third delay between the user plane apparatus and an application server; and
determining a delay between the terminal device and the application server based on the first delay and the third delay.

11. The method according to claim 2, wherein the method further comprises:
receiving, by the user plane apparatus, a per-packet QoS monitoring indication from a control plane apparatus, wherein the per-packet QoS monitoring indication indicates the user plane apparatus to perform QoS monitoring on each data packet sent by the user plane apparatus.

12. A delay measurement method, comprising:
receiving, by an access network apparatus, a first data packet, wherein the first data packet comprises a first indication and a second indication, the first indication indicates the access network apparatus to perform quality of service QoS monitoring, and the second indication indicates the terminal device to report first information;
performing, by the access network apparatus, QoS monitoring between the access network apparatus and a user plane apparatus based on the first indication;
sending, by the access network apparatus, the first data packet to the terminal device, and receiving the first information from the terminal device; and
sending, by the access network apparatus, the first information and second information to the user plane apparatus, wherein the second information is QoS monitoring information of the access network apparatus, the first information is used to determine a first delay, the second information is used to determine a second delay, the first delay is a delay between the user plane apparatus and the terminal device, the second delay is a delay between the user plane apparatus and the access network apparatus, the first delay and the second delay are used to determine a target delay, and the target delay is a delay between the terminal device and the access network apparatus.

13. The method according to claim 12, wherein a packet in which the first information is located comprises a third indication, and the third indication indicates the access network apparatus to add the second information to the packet in which the first information is located; and
the access network apparatus adds, based on the third indication, the second information to the packet in which the first information is located.

14. A delay measurement method, comprising:
receiving, by a terminal device, a first data packet, wherein the first data packet comprises a second indication, and the second indication indicates the terminal device to report first information;
determining, by the terminal device, the first information based on the second indication; and
sending, by the terminal device, the first information to an access network apparatus, wherein the first information is used to determine a first delay, and the first delay is a delay between a user plane apparatus and the terminal device.

15. The method according to claim 14, wherein the method further comprises:
adding, by the terminal device, a third indication to a packet in which the first information is located, wherein the third indication indicates the access network apparatus to add the second information to the packet in which the first information is located; and
the sending, by the terminal device, the first information to the access network apparatus comprises:
sending, by the terminal device, a packet comprising the first information and the third indication to the access network apparatus.

16. The method according to claim 14 or 15, wherein the second indication in the first data packet is a round-trip time RTT message; and correspondingly, the first information is round-trip time RTT response information.

17. The method according to claim 14 or 15, wherein the second indication in the first data packet indicates to send an uplink synchronization packet, and correspondingly, the packet comprising the first information is an uplink synchronization packet.

18. The method according to claim 14 or 15, wherein the second indication in the first data packet indicates to send a downlink synchronization packet, the downlink synchronization packet further comprises a downlink delay indication, and the downlink delay indication indicates the terminal device to report a downlink delay between the user plane apparatus and the terminal device; and
correspondingly, the first information is a downlink synchronization delay, and the first delay is a downlink delay between the user plane apparatus and the terminal device.

19. A communication apparatus, wherein the communication apparatus comprises a transceiver module and a processing module, wherein
the transceiver module is configured to perform a transceiving operation of the method according to any one of claims 1 to 11, 12 and 13, and 14 to 18, and the processing module is configured to perform a processing operation of the method according to any one of claims 1 to 11, 12 and 13, and 14 to 18.

20. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 11, 12 and 13, and 14 to 18.

21. A communication apparatus, wherein the communication apparatus comprises a processor, and the processor is configured to perform the method according to any one of claims 1 to 11, 12 and 13, and 14 to 18.

22. A computer-readable storage medium, wherein the computer-readable storage medium stores a computer program, and when the computer program is executed by a communication apparatus, the communication apparatus is enabled to perform the method according to any one of claims 1 to 11, 12 and 13, and 14 to 18.

23. A computer program product comprising instructions, wherein when the computer program product runs on a computer, the computer is enabled to perform the method according to any one of claims 1 to 11, 12 and 13, and 14 to 18.
